# EUROPEAN PATENT APPLICATION

(11) **EP 3 493 356 A1**
(43) Date of publication of application: **05.06.2019**
(21) Application number: 17833450.4
(22) Date of filing: 17.07.2017
(51) Int. Cl.: H02J 7/02

(54) **ELECTRIC CAR, IN-VEHICLE CHARGER OF ELECTRIC CAR, AND CONTROL METHOD FOR SAME**

(30) Priority: 28.07.2016 CN 201610617355
(71) Applicant: BYD Company Limited, Shenzhen, Guangdong 518118 (CN)
(72) Inventor: WANG, Xinghui, Shenzhen Guangdong 518118 (CN)
(74) Representative: Ziebig & Hengelhaupt Patentanwälte PartG mbB
(86) International application number: PCT/CN2017/093202
(87) International publication number: WO 2018/019147

(57) **Abstract**

The present invention discloses an electric vehicle, a car charger for an electric vehicle and a control method thereof. The car charger includes: a charging contactor, a first end of which is configured for coupling to a first end of an alternating-current power source; an H bridge, including first and second alternating-current ends and first and second direct-current ends, where the first and second direct-current ends are configured for coupling to a power battery, the first alternating-current end is configured for coupling to a second end of the charging contactor, and the second alternating-current end is configured for coupling to a second end of the alternating-current power source; a first voltage sampling module, configured to sample a voltage of the first end of the charging contactor to obtain a first sampling voltage; a second voltage sampling module, configured to sample a voltage of the second end of the charging contactor to obtain a second sampling voltage; and a control module, configured to control the H bridge to perform an inversion operation when the alternating-current power source is coupled to the car charger such that the second sampling voltage has a synchronous phase and the same amplitude as the first sampling voltage, then control the charging contactor to pull in, and control the H bridge to perform a rectifying operation such that the alternating-current power source charges the power battery.

## Description

### FIELD

The present invention relates to the technical field of electric vehicles, and particularly to a car charger for an electric vehicle, a control method of a car charger for an electric vehicle, and an electric vehicle.

### BACKGROUND

With the commercialization of electric vehicles, a car charging system for electric vehicles has become one of the important parts of electric vehicles, and there are many charging methods for car systems.

In a current car charger, to prevent damage to a charging circuit caused by large current generated by a charging power source, a pre-charging circuit including a pre-charging resistor is an indispensable part. However, the design of the pre-charging circuit including the pre-charging resistor undoubtedly makes the structure of the car charger more complicated and costly. In addition, the service life and effectiveness of the pre-charging circuit and the like may also affect the stability of the car charger.

### SUMMARY

The present invention aims to resolve at least one of the technical problems in the above-mentioned technology to some extent. Therefore, the present invention is first directed to a car charger for an electric vehicle, which not only may protect a charging circuit, but also has the advantages of simple structure, low cost and high reliability.

The present invention is secondly directed to an electric vehicle.

The present invention is thirdly directed to a control method of a car charger for an electric vehicle.

To achieve the above objects, an embodiment of a first aspect of the present invention provides a car charger for an electric vehicle. The car charger includes: a charging contactor, where a first end of the charging contactor is configured for coupling to a first end of an alternating-current power source; an H bridge, where the H bridge includes a first alternating-current end, a second alternating-current end, a first direct-current end and a second direct-current end, the first direct-current end and the second direct-current end are configured for coupling to a power battery, the first alternating-current end is configured for coupling to a second end of the charging contactor, and the second alternating-current end is configured for coupling to a second end of the alternating-current power source; a first voltage sampling module, where the first voltage sampling module is configured to sample a voltage of the first end of the charging contactor to obtain a first sampling voltage; a second voltage sampling module, where the second voltage sampling module is configured to sample a voltage of the second end of the charging contactor to obtain a second sampling voltage; and a control module, where the control module is configured to control the H bridge to perform an inversion operation when the alternating-current power source is coupled to the car charger such that the second sampling voltage has a synchronous phase and the same amplitude as the first sampling voltage, then control the charging contactor to pull in, and control the H bridge to perform a rectifying operation such that the alternating-current power source charges the power battery.

According to the car charger for an electric vehicle of an embodiment of the present invention, the first voltage sampling module samples the voltage of the first end of the charging contactor to obtain a first sampling voltage, the second voltage sampling module samples the voltage of the second end of the charging contactor to obtain a second sampling voltage, and the control module controls the H bridge to perform an inversion operation when the alternating-current power source is coupled to the car charger such that the second sampling voltage has a synchronous phase and the same amplitude as the first sampling voltage, then controls the charging contactor to pull in, and controls the H bridge to perform a rectifying operation such that the alternating-current power source charges the power battery. Therefore, the car charger for an electric vehicle not only may protect a charging circuit, but also has the advantages of simple structure, low cost and high reliability.

To achieve the above objects, an embodiment of a second aspect of the present invention provides an electric vehicle. The electric vehicle includes the car charger for an electric vehicle provided by the embodiment of the first aspect of the present invention.

According to the electric vehicle of the embodiment of the present invention, the car charger not only may protect a charging circuit, but also has the advantages of simple structure, low cost and high reliability.

To achieve the above objects, an embodiment of a third aspect of the present invention provides a control method of a car charger for an electric vehicle, where the car charger includes an H bridge and a charging contactor, a direct-current end of the H bridge is configured for coupling to a power battery of a vehicle, and an alternating-current end is configured for coupling to an alternating-current power source through a charging contactor; a first end of the charging contactor is coupled to one end of the alternating-current power source, and a second end of the charging contactor is coupled to an alternating-current end of the H bridge, the control method including: sampling a voltage of the first end of the charging contactor to obtain a first sampling voltage, and sampling a voltage of the second end of the charging contactor to obtain a second sampling voltage; controlling the H bridge to perform an inversion operation when the alternating-current power source is coupled to the car charger such that the second sampling voltage has a synchronous phase and the same amplitude as the first sampling voltage; and controlling the charging contactor to pull in and controlling the H bridge to perform a rectifying operation such that the alternating-current power source charges the power battery after the second sampling voltage has a synchronous phase and the same amplitude as the first sampling voltage.

According to the control method of the car charger for an electric vehicle of an embodiment of the present invention, the voltage of the first end of the charging contactor is sampled to obtain a first sampling voltage, the voltage of the second end of the charging contactor is sampled to obtain a second sampling voltage, and the H bridge is controlled to perform an inversion operation when the alternating-current power source is coupled to the car charger such that the second sampling voltage has a synchronous phase and the same amplitude as the first sampling voltage, and then the charging contactor is controlled to pull in and the H bridge is controlled to perform a rectifying operation such that the alternating-current power source charges the power battery. Therefore, the control method may protect a charging circuit and greatly simplify the structure of the car charger, thereby lowering the cost of the car charger and enhancing the reliability of the car charger.

The additional aspects and advantages of the present invention will be set forth in part in the description below, parts of which will become apparent from the description below, or will be understood by the practice of the present invention.

### BRIEF DESCRIPTION OF THE DRAWINGS

FIG. 1 is a schematic structural view of a car charger for an electric vehicle according to an embodiment of the present invention;
FIG. 2 is a block schematic diagram of an electric vehicle according to an embodiment of the present invention; and
FIG. 3 is a flow chart of a control method of a car charger for an electric vehicle according to an embodiment of the present invention.

### DETAILED DESCRIPTION

The following describes in detail embodiments of the present invention. Examples of the embodiments are shown in the accompanying drawings, where reference signs that are the same or similar throughout the specification represent same or similar components or components that have same or similar functions. The following embodiments described with reference to the accompanying drawings are exemplary, which are used only to explain the present invention, and cannot be construed as a limitation to the present invention.

Hereinafter, an electric vehicle, a car charger for an electric vehicle and a control method thereof according to the embodiments of the present invention will be described with reference to the accompanying drawings.

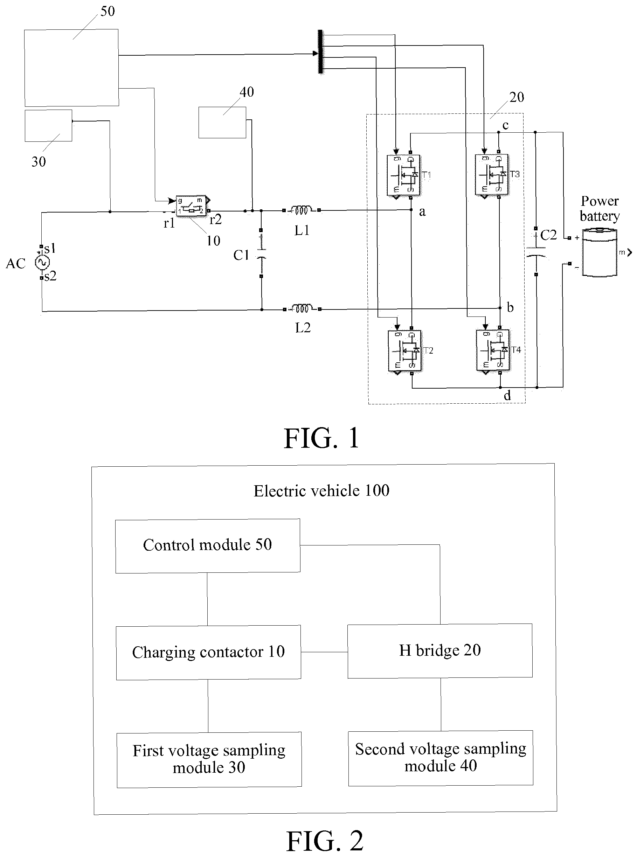

FIG. 1 is a schematic structural view of a car charger for an electric vehicle according to an embodiment of the present invention.

Referring to FIG. 1, the car charger for an electric vehicle of an embodiment of the present invention includes: a charging contactor 10, an H bridge 20, a first voltage sampling module 30, a second voltage sampling module 40 and a control module 50.

A first end r1 of the charging contactor 10 is configured for coupling to a first end s1 of an alternating-current power source AC. The H bridge 20 includes a first alternating-current end a, a second alternating-current end b, a first direct-current end c and a second direct-current end d, the first direct-current end c and the second direct-current end d are configured for coupling to a power battery, the first alternating-current end a is configured for coupling to a second end r2 of the charging contactor 10, and the second alternating-current end b is configured for coupling to a second end s2 of the alternating-current power source AC. The first voltage sampling module 30 is configured to sample a voltage of the alternating-current power source AC (i.e., a voltage of the first end of the charging contactor 10) to obtain a first sampling voltage, and the second voltage sampling module 40 is configured to sample a voltage of the alternating-current end of the H bridge 20 (i.e., a voltage of the second end of the charging contactor 10) to obtain a second sampling voltage. The control module 50 is configured to control the H bridge 20 to perform an inversion operation when the alternating-current power source AC is coupled to the car charger such that the second sampling voltage has a synchronous phase and the same amplitude as the first sampling voltage, then control the charging contactor 10 to pull in, and control the H bridge 20 to perform a rectifying operation such that the alternating-current power source AC charges the power battery.

Specifically, as shown in FIG. 1, the H bridge 20 may include a first switch tube T1, a second switch tube T2, a third switch tube T3 and a fourth switch tube T4, where the first switch tube T1 and the second switch tube T2 form a first bridge arm of the H bridge 20, and a node a between the first switch tube T1 and the second switch tube T2 is connected to the second end r2 of the charging contactor 10 through a first inductor LI; and the third switch tube T3 and the fourth switch tube T4 form a second bridge arm of the H bridge 20, a node b between the third switch tube T3 and the fourth switch tube T4 is connected to the second end s2 of the alternating-current power source AC through a second inductor L2, and the second bridge arm is connected in parallel with the first bridge arm. In an embodiment of the present invention, the first switch tube to the fourth switch tube may be IGBTs (insulated gate bipolar transistors) or MOSFETs (metal-oxide-semiconductor field effect transistors).

As shown in FIG. 1, the car charger of the embodiment of the present invention may further include a first capacitor C1 and a second capacitor C2, where the first capacitor C1 is connected between the second end r2 of the charging contactor 10 and the second end s2 of the alternating-current power source AC, and the second capacitor C2 is connected between the first direct-current end c and the second direct-current end d.

In an embodiment of the present invention, as shown in FIG. 1, the first voltage sampling module 30 may be linked to the first end r1 of the charging contactor 10, and the second voltage sampling module 40 may be linked to the second end r2 of the charging contactor 10.

In an embodiment of the present invention, the control module 50 may control the first switch tube T1 to be in an always-on state, control the second switch tube T2 to be in an always-off state and control the third switch tube T3 and the fourth switch tube T4 to be on and off alternately and complementarily, when the second sampling voltage is greater than 0, and control the third switch tube T3 to be in an always-on state, control the fourth switch tube T4 to be in an always-off state and control the first switch tube T1 and the second switch tube T2 to be on and off alternately and complementarily, when the second sampling voltage is less than 0 such that the second sampling voltage has a synchronous phase and the same amplitude as the first sampling voltage.

According to the car charger for an electric vehicle of an embodiment of the present invention, the first voltage sampling module samples the voltage of the alternating-current power source coupled to the car charger to obtain a first sampling voltage, the second voltage sampling module samples the voltage of the alternating-current end of the H bridge to obtain a second sampling voltage, and the control module controls the H bridge to perform an inversion operation when the alternating-current power source is coupled to the car charger such that the second sampling voltage has a synchronous phase and the same amplitude as the first sampling voltage, then controls the charging contactor to pull in, and controls the H bridge to perform a rectifying operation such that the alternating-current power source charges the power battery. Therefore, the car charger for an electric vehicle not only may protect a charging circuit, but also has the advantages of simple structure, low cost and high reliability.

It should be noted that, on the one hand, the car charger of the above embodiment may realize safe and reliable charging without using a pre-charging resistor and/or a pre-charging capacitor in comparison to a charging circuit that controls the operation of the pre-charging resistor and capacitor through complicated operations. On the other hand, the car charger for an electric vehicle of the embodiment of the present invention may also be applied to a circuit including a pre-charging resistor. Under the control of the above-mentioned structure and the control module, it is possible to ensure the normal charging when the pre-charging resistor and its related circuit fail, thereby enhancing the reliability of the car charger.

Corresponding to the above embodiments, the present invention further proposes an electric vehicle.

The electric vehicle of the embodiment of the present invention includes the car charger for an electric vehicle provided by the above embodiment of the present invention. As shown in FIG. 2, the electric vehicle 100 of the embodiment of the present invention includes a charging contactor 10, an H bridge 20, a first voltage sampling module 30, a second voltage sampling module 40 and a control module 50. For more specific implementations, reference may be made to the above embodiments. To avoid redundancy, details are not described herein again.

According to the electric vehicle of the embodiment of the present invention, the car charger not only may protect a charging circuit, but also has the advantages of simple structure, low cost and high reliability.

Corresponding to the above embodiments, the present invention further provides a control method of a car charger for an electric vehicle.

The vehicle charger of the embodiment of the present invention includes an H bridge and a charging contactor. The car charger includes an H bridge and a charging contactor, a direct-current end of the H bridge is configured for coupling to a power battery of a vehicle, and an alternating-current end is configured for coupling to an alternating-current power source through the charging contactor. A first end of the charging contactor is coupled to one end of the alternating-current power source, and a second end of the charging contactor is coupled to an alternating-current end of the H bridge.

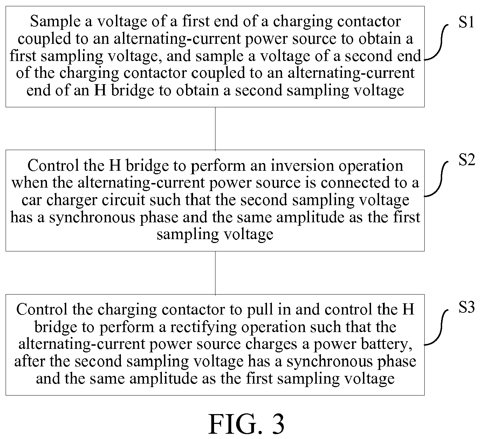

As shown in FIG. 3, the control method of the car charger for an electric vehicle of the embodiment of the present invention includes the following steps:

S1: A voltage of the alternating-current power source coupled to the car charger (i.e., the first end of the charging contactor) is sampled to obtain a first sampling voltage, and a voltage of the alternating-current end of the H bridge (i.e., the second end of the charging contactor) is sampled to obtain a second sampling voltage.

S2: The H bridge is controlled to perform an inversion operation when the alternating-current power source is coupled to the car charger such that the second sampling voltage has a synchronous phase and the same amplitude as the first sampling voltage.

Referring to FIG. 1, the H bridge may include a first switch tube, a second switch tube, a third switch tube and a fourth switch tube. Controlling the H bridge to perform an inversion operation such that the second sampling voltage has a synchronous phase and the same amplitude as the first sampling voltage may specifically include: controlling the first switch tube to be in an always-on state, controlling the second switch tube to be in an always-off state and controlling the third switch tube and the fourth switch tube to be on and off alternately and complementarily, when the second sampling voltage is greater than 0; and controlling the third switch tube to be in an always-on state, controlling the fourth switch tube to be in an always-off state and controlling the first switch tube and the second switch tube to be on and off alternately and complementarily, when the second sampling voltage is less than 0.

S3: The charging contactor is controlled to pull in and the H bridge is controlled to perform a rectifying operation such that the alternating-current power source charges the power battery, after the second sampling voltage has a synchronous phase and the same amplitude as the first sampling voltage.

According to the control method of the car charger for an electric vehicle of an embodiment of the present invention, the voltage of the alternating-current power source coupled to the car charger is sampled to obtain a first sampling voltage, the voltage of the alternating-current end of the H bridge is sampled to obtain a second sampling voltage, and the H bridge is controlled to perform an inversion operation when the alternating-current power source is coupled to the car charger such that the second sampling voltage has a synchronous phase and the same amplitude as the first sampling voltage, and then the charging contactor is controlled to pull in and the H bridge is controlled to perform a rectifying operation such that the alternating-current power source charges the power battery. Therefore, the control method may protect the charging circuit and greatly simplify the structure of the car charger, thereby lowering the cost of the car charger and enhancing the reliability of the car charger.

In the description of various embodiments, the term "coupling" is used. Coupling represents interlinkage between two originally separate circuits or between two originally separate portions of a circuit, and coupling may be direct or indirect. "Coupling" allows energy or signals to be transferred from one circuit to another, or from one portion of the circuit to another portion. Thus, "coupling" in the present application will include, but not limited to, a physical electrical connection and a communication linkage in a form of signal transmission. Specifically, for two equivalent two-port networks, coupling between the ports of the two two-port networks may be that two terminals on one side of the first two-port network are electrically connected to two terminals on one side of the second two-port network respectively.

In the descriptions of the present invention, it should be understood that orientations or position relationships indicated by terms such as "central", "longitudinal", "lateral", "length", "width", "thickness", "on", "under", "front", "rear", "left", "right", "vertical", "horizontal", "top", "bottom", "inside", "outside", "clockwise" and "counterclockwise" are orientations or position relationships indicated based on the accompanying drawings, and are used only for ease of describing the present invention and of simplified descriptions rather than for indicating or implying that an apparatus or a component needs to have a particular orientation or needs to be constructed or operated in a particular orientation, and therefore, cannot be construed as a limitation to the present invention.

In addition, terms "first" and "second" are used only for describing objectives, and shall not be construed as indicating or implying relative importance or implying a quantity of indicated technical features. Therefore, a feature restricted by "first " or "second" may explicitly indicate or implicitly include one or more such features. In the descriptions of the present invention, unless otherwise specified, "multiple" means two or more than two.

In the present invention, unless otherwise explicitly specified and defined, the terms "mounting", "linking", "connection", "fixing" and the like shall be understood broadly, and may be, for example, a fixed connection, a detachable connection or integration; may be a mechanical connection or an electrical connection; or may be a direct connection, an indirect connection through an intermediate medium, or an internal communication between two components or interaction between two components. A person of ordinary skill in the art can understand specific meanings of the foregoing terms in the present invention according to a specific situation.

In the present invention, unless otherwise explicitly specified and defined, a first feature "on" or "under" a second feature may be a direct contact between the first and second features, or an indirect contact between the first and second features through an intermediate medium. Moreover, the first feature "on", "above" and "on the top of' the second feature may be that the first feature is directly above or obliquely above the second feature, or merely that the level of the first feature level is higher than that of the second feature. The first feature "under", "below" and "on the bottom of' the second feature may be that the first feature is directly below or obliquely below the second feature, or merely that the level of the first feature is lower than that of the second feature.

In the description of this specification, the description with reference to the terms "one embodiment", "some embodiments", "example", "specific example", or "some examples" and the like means that specific features, structures, materials, or characteristics described in connection with the embodiments or examples are included in at least one embodiment or example of the present invention. In this specification, the schematic representation of the above terms is not necessarily directed to the same embodiment or example. Furthermore, the particular features, structures, materials, or characteristics described may be combined in a suitable manner in any one or more embodiments or examples. In addition, various embodiments or examples described in this specification, as well as features of various embodiments or examples, may be combined and associated by those skilled in the art without contradicting each other.

While the embodiments of the present invention have been shown and described, it is understood that the above embodiments are illustrative and are not to be construed as limiting the present invention. Changes, modifications, replacements and variations of the above embodiments may be made by those skilled in the art within the scope of the present invention.

## Claims

1. A car charger for an electric vehicle, comprising:
a charging contactor, wherein a first end of the charging contactor is configured for coupling to a first end of an alternating-current power source;
an H bridge, wherein the H bridge comprises a first alternating-current end, a second alternating-current end, a first direct-current end and a second direct-current end, the first direct-current end and the second direct-current end are configured for coupling to a power battery, the first alternating-current end is configured for coupling to a second end of the charging contactor, and the second alternating-current end is configured for coupling to a second end of the alternating-current power source;
a first voltage sampling module, wherein the first voltage sampling module is configured to sample a voltage of the first end of the charging contactor to obtain a first sampling voltage;
a second voltage sampling module, wherein the second voltage sampling module is configured to sample a voltage of the second end of the charging contactor to obtain a second sampling voltage; and
a control module, wherein the control module is configured to control the H bridge to perform an inversion operation when the alternating-current power source is coupled to the car charger such that the second sampling voltage has a synchronous phase and the same amplitude as the first sampling voltage, then control the charging contactor to pull in, and control the H bridge to perform a rectifying operation such that the alternating-current power source charges the power battery.

2. The car charger according to claim 1, wherein the H bridge comprises:
a first switch tube and a second switch tube, wherein the first switch tube and the second switch tube form a first bridge arm of the H bridge, and a node between the first switch tube and the second switch tube is connected to the second end of the charging contactor through a first inductor; and
a third switch tube and a fourth switch tube, wherein the third switch tube and the fourth switch tube form a second bridge arm of the H bridge, a node between the third switch tube and the fourth switch tube is connected to the second end of the alternating-current power source through a second inductor, and the second bridge arm is connected in parallel with the first bridge arm.

3. The car charger according to claim 2, wherein the first switch tube to the fourth switch tube are IGBTs or MOSFETs.

4. The car charger according to any one of claims 1 to 3, further comprising:
a first capacitor, wherein the first capacitor is coupled between the second end of the charging contactor and the second end of the alternating-current power source; and
a second capacitor, wherein the second capacitor is coupled between the first direct-current end and the second direct-current end of the H bridge.

5. The car charger according to any one of claims 1 to 4, wherein the first voltage sampling module is coupled to the first end of the charging contactor, and the second voltage sampling module is coupled to the second end of the charging contactor.

6. The car charger according to any one of claims 2 to 5, wherein the control module is further configured to:
control the first switch tube to be in an always-on state, control the second switch tube to be in an always-off state and control the third switch tube and the fourth switch tube to be on and off alternately and complementarily, when the second sampling voltage is greater than 0; and
control the third switch tube to be in an always-on state, control the fourth switch tube to be in an always-off state and control the first switch tube and the second switch tube to be on and off alternately and complementarily, when the second sampling voltage is less than 0 such that the second sampling voltage has a synchronous phase and the same amplitude as the first sampling voltage.

7. An electric vehicle, comprising the car charger according to any one of claims 1 to 6.

8. A control method of a car charger for an electric vehicle, wherein the car charger comprises an H bridge and a charging contactor, a direct-current end of the H bridge is configured for coupling to a power battery of a vehicle, and an alternating-current end is configured for coupling to an alternating-current power source through a charging contactor; a first end of the charging contactor is coupled to one end of the alternating-current power source, and a second end of the charging contactor is coupled to an alternating-current end of the H bridge, the control method comprising:
sampling a voltage of the first end of the charging contactor to obtain a first sampling voltage, and sampling a voltage of the second end of the charging contactor to obtain a second sampling voltage;
controlling the H bridge to perform an inversion operation when the alternating-current power source is coupled to the car charger such that the second sampling voltage has a synchronous phase and the same amplitude as the first sampling voltage; and
controlling the charging contactor to pull in and controlling the H bridge to perform a rectifying operation such that the alternating-current power source charges the power battery after the second sampling voltage has a synchronous phase and the same amplitude as the first sampling voltage.

9. The control method of the car charger for an electric vehicle according to claim 8, wherein a first bridge arm of the H bridge comprises first and second switch tubes connected in series, and a node between the two is coupled as an alternating-current end to the second end of the charging contactor; a second bridge arm of the H bridge comprises third and fourth switch tubes connected in series, a node between the two is coupled as another alternating-current end to the second end of the alternating-current power source, and the second bridge arm and the first bridge arm are connected in parallel between two direct-current ends of the H bridge, where controlling the H bridge to perform an inversion operation such that the second sampling voltage has a synchronous phase and the same amplitude as the first sampling voltage comprises:
controlling the first switch tube to be in an always-on state, controlling the second switch tube to be in an always-off state and controlling the third switch tube and the fourth switch tube to be on and off alternately and complementarily, when the second sampling voltage is greater than 0; and
controlling the third switch tube to be in an always-on state, controlling the fourth switch tube to be in an always-off state and controlling the first switch tube and the second switch tube to be on and off alternately and complementarily, when the second sampling voltage is less than 0.
